# EUROPEAN PATENT APPLICATION

(11) **EP 1 804 039 A1**
(43) Date of publication of application: **04.07.2007**
(21) Application number: 05425938.7
(22) Date of filing: 29.12.2005
(51) Int. Cl.: G01F 23/292

(54) **Process and device for controlling a filling level**

(71) Applicant: WAM S.p.A., 41030 Ponte Motta Cavezzo (Modena) (IT)
(72) Inventor: Marchesini, Vainer, 41030 San Prospero Modena (IT); Passerini, Massimo, 44100 Ferrara (IT)
(74) Representative: Gotra, Stefano

(57) **Abstract**

The process comprises a stage of highlighting a plurality of light points (3) of a free surface (2) of the material contained in the silo, of detecting a position of each of the light points (3) and obtaining electrical signals which are proportional to the detected position of each point, and processing the signals to obtain a virtual reproduction of the free surface (2) of the material which when processed provide desired data. The device for realising the process comprises lasers (10), which project a laser beam towards the free surface (2) of the material contained in the silo, an optical sensor (11) which detects the position of the light points (3) defined by each laser beam on the free surface (2), and a data processing system (15) which processes the data relating to the position of the lasers (10), the inclination of the laser beams, and the detected positions of the light points (3) in such a way as to construct a virtual free surface of the material.

## Description

The invention relates in particular to checking a state of filling, i.e. a level of a material, and the shape of the upper surface of the material too, in silos containing powder or granule materials used in the building, food and chemical industries and in general all those industries which use loose materials by removing them from silos where they are stored in great quantities.

In silos the material is generally loaded from above, to fill the silo, and is later removed from below through special valves through which the material is removed, generally by gravity.

One of the requirements of these silos is that it must always be known as closely as possible how much material is in the silo. This represents the basic information needed in order correctly to order a correct amount of material so that the silo never empties, a situation that would have obvious negative repercussions on the productive processes requiring the materials. As most silos are cylindrical, the quantity of material contained in them is directly proportional to the height of the material internal of the silo. Thus the assessment of the height of the material, which can be done visually, using possibly graduated transparent spy-holes, or using telemetric measurements, should give an immediate reading of the silo contents.

In reality this type of assessment is extremely approximate as the shape of the top surface of the material in the silo is hardly ever flat. During both loading and unloading the material tends to develop a free surface having a conical shape, inversely conical during both loading and unloading. The shape of the free surface of the material is also strongly influenced by the speed of introduction and dispensing of the material, the degree of cohesion of the material itself (also influenced by the degree of humidity in the environment) and by the greater or lesser homogeneity of the material contained in the silo. Thus the free surface of the materials assumes an irregular shape which varies, quite predictably, according to the above-discussed conditions. Assessing the quantity of material contained in the silo on the basis of the height of the material in it is therefore not reliable in full as the height of the material is variable from place to place, due to the variation in the shape of the free surface of the material, which cannot be determined a priori.

To obviate this drawback, silos are usually provided with vibrator devices or shakers which, on command or at regular intervals, shake the materials, which tend to flatten out, eliminating the irregularities from the free surface and obtaining a fairly flat result; in this way the quantity of material in the silo can be better assessed by measuring the level of the material. This flattening operation also helps in the introduction and extraction of the material, as well as improving its homogeneity, especially in the presence of materials constituted by mixtures of different products. Obviously this method leads to a considerable consumption of energy which, among other things, is used without there being a true proof of need thereof, as it is not really known if and by how much the free surface is irregular.

Furthermore, the devices at present in use are able to act on the "effects" (i.e. the irregularity of the surface) and not on the causes which originated them.

The aim of the present invention is to obviate the above-indicated drawbacks by providing a process and a device which enable a precise reading of a state of filling of a silo to be made, without any reference to the form of the free surface of the material contained therein.

An advantage of the invention is that it provides a process and a device which allow the shape of the free surface of the material in the silo to be identified at any moment.

A further advantage of the invention is to provide a process and a device which operate internally of a silo without constituting any obstacle to the normal movement of the material internally of the silo itself.

A further advantage of the invention is that it provides a process and a device which operate internally of a silo without constituting any obstacle to the normal movement of the material internally of the silo.

A further advantage of the invention is to provide a process and device which enable the silo constructors to glean information relating to the incidence of the geometrical and constructional characteristics of silos on the movement of materials internally of the silos.

A further advantage of the invention is to provide a process and a device which are relatively economical, easy to apply even to operating silos, and simple to maintain.

These aims and advantages and more besides are attained by the invention, as it is characterised in the appended claims.

Further characteristics and advantages of the present invention will better emerge from the detailed description which follows of possible stages of the process of the invention, as well as an embodiment of the invention, illustrated by way of non-limiting example in the figures of the drawings, in which:

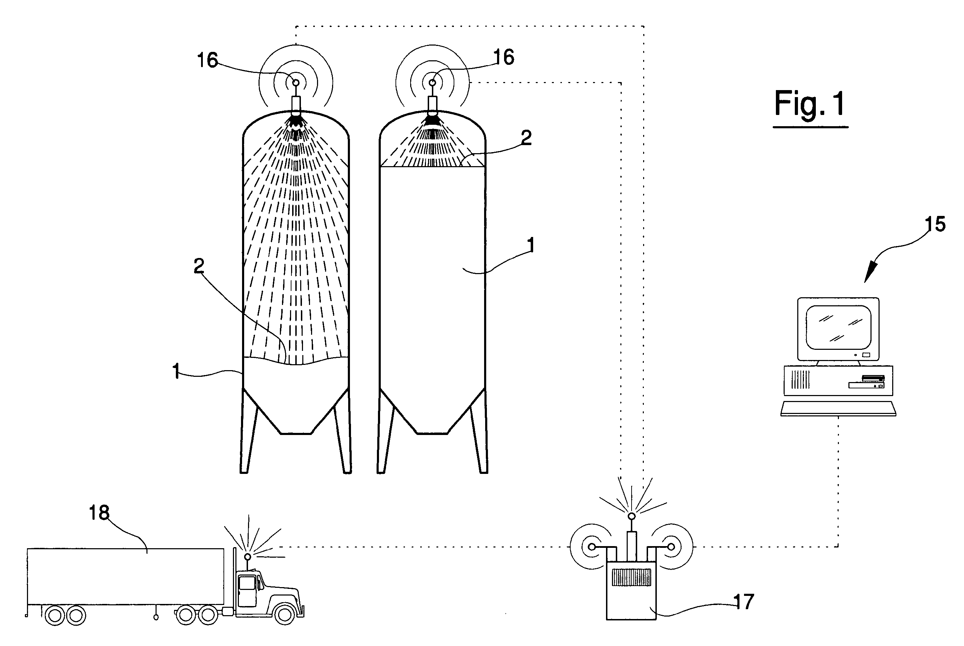

Figure 1 is a diagram of a possible device actuating the process of the invention;

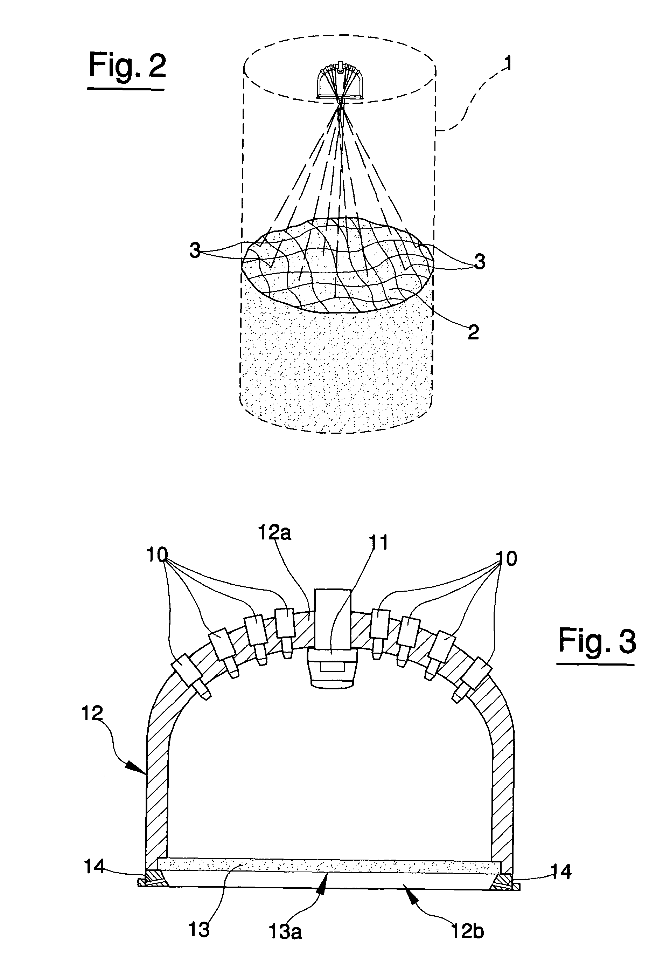

Figure 2 is a schematic view of the free surface of the material contained in a silo on which the light signals generated by the device are projected;
Figure 3 is a section view of the device which generates and collects the signals used by the process and device of the invention.

The process of the invention verifies the state of filling of a silo 1 containing loose materials, such as powders, granules, and the like; in particular the free surface 2 of the material contents in the silo can be assessed and virtually reproduced.

In a first stage the process evidences, in a way that can be read by known-type instruments, a plurality of points 3 of the free surface 2 of the material contained in the silo. To highlight some points 3 of the surface 2 a laser light beam is sent onto the surface 2, and when it hits the surface a light point 3 is obtained on the surface. For reasons that will be more fully clarified herein below, each laser beam has a predetermined direction; in other words, each laser beam is directed with a known inclination to the vertical. The laser beams which generate the points 3 are sent onto the surface 2 from above in the silo; for this purpose the devices generating the laser beams are arranged on the top part of the silo and face internally of the silo.

The process of the invention also comprises the stage of detecting the position of each of the points 3 with respect to a reference system.

This detection stage is done starting from a check of the fixed position of the laser beam source and the inclination of the beam; as both the fixed position of the laser beam source and inclination are known, as they are defined during construction, this check is done very simply using known-type device, such as for example an electronic program to which the relative data is supplied relating to the position of each laser source as well as the inclination of the beam emitted therefrom.

Then the light point is identified, which corresponds to the beam from the activated laser source, by means of an fixed-focus optical device such as, for example, a telecamera; from the image of the detected point an electrical signal is obtained which is proportional to the detected position of the point image. By sending this to the program, which already has the data relative to the positioning of the laser beam and the direction of the beam, it is extremely simple to calculate the position of the spatial position of the light point using a geometric triangulation operation.

The stage of evidencing the points 3 and the subsequent detection stage of the points 3 happen singly for each point and in a predetermined sequence in order to obtain a sequence of data, each datum of which is relative to the spatial position of a point of the free surface of the product internally of the silo.

The data, or rather the signals corresponding to it, is then processed in its entirety to obtain a virtual reproduction of the free surface 2 of the material which corresponds, with a level of precision that depends on the number of points 3 processed, to the real free surface of the material internally of the silo.

The virtual surface thus obtained can be processed in order to obtain the desired information; for example, the average level of the product in the silo can be calculated, and consequently and precisely the total quantity can be deduced, or the arrangement and level of the lowest parts of the free surface (from which a larger volume of removal or a smaller load level of material are taken), or the highest parts (which may be leading to more difficult dispensing or may be giving excessive loads). This to say that much more information than the simple quantity of product contained in the silo can be gleaned, so that an assessment of the dynamics involved in the material loading and unloading operations can be obtained.

As silos are usually rather tall and in order to obtain good images the fixed-focus cameras have a field depth that is shorter than the height of the silo, a plurality of the fixed-focus optical devices is used, each of which identifies the light points on the surface 2 in areas at a predetermined height in the silo; in other words, according to the positions the free surfaces assumes, a different camera will be called upon, in order that a sharp picture of the points 3 is continually achieved. This procedure is easier than with variable-focus cameras which might however be used, though with more difficulty.

A radio transmission stage is also advantageously included, which transmits the electrical signals which are proportional to the detected position at each point to the processing system. This enables the processing operations to be performed at a distance (for example in an office), without the need for connection cables which connect the processing system to a silo. In the same radio transmission, new orders for product can also be made automatically, when the product quantity in the silo falls below a prefixed level.

A possible embodiment of the device for enabling the process of the invention comprises a cap which is fixed on the upper part of the silo 1; the cap 12 is defined by an upper wall 12a closed in the lower part 12b by a transparent surface 13 facing inside the silo 1.

The laser beam emitters are arranged and fixed on the upper wall 12a of the cap 12, and can emit a laser beam, with a predetermined inclination, internally of the silo or towards the free surface of the material contained in the silo 1.

An optical sensor 11, of known type and preferably realised with a fixed-focus camera, is fixed on the upper wall 12a of the cap 12. The sensor 11 detects the position of each of the light points 3 defined by the various laser beams on the free surface 2. The sensor 11 also supplies an electrical signal corresponding to the position of each point 3.

To obtain better results often more than one camera 11 is used, each having a different focus and being destined to perform the operation of identifying the luminous points obtained on the surface 2 in defined zones distributed among predetermined points in the silo; according to the positions the free surface of the material takes on, a different camera will enter into play, i.e. the camera with the most appropriate focal distance, in order always to have the best-focussed image possible of the points 3.

The transparent surface 13, which is preferably a flat surface, protects the lasers 10 and the camera 11, which are inside a closed environment not in contact with any dust that might blow about inside the silo, but permits passage of the light beams emitted by the lasers 10 and also enables the sensor 11 to "see" the light points 3 defined by the laser beams on the surface 2.

To prevent dust from settling on the wall 13a of the transparent surface 13, which would dirty the wall 13a and hinder the passage of the laser beam, but which would especially affect the detection of the images on the part of the camera 11, a plurality of conduits 14 is provided, afforded in the cap 12 and exhibiting an end facing the wall 13a of the transparent surface 13; the other end of each of the conduits 14 is connected to a fluid source, normally compressed air. On command the fluid is blown though the conduits 14 and against the wall 13a in order to clear it.

The device further comprises a data processing system 15, which is of known type and is normally realised by means of a normal electronic processor. The processing system 15 processes the electrical signals, which are supplied by the camera 11 and which correspond to the position of each point 3, and process the signals proportional to the position of the corresponding laser 10 source and inclination of the laser beam thereof. The processing system 15 also calculates the geometrical coordinates of the single light beam 3 detected and the geometrical coordinates of all the points detected in order to construct a virtual free surface of the material.

The operations performed by the processing system are rather simple. They are geometric triangulations, calculations of mean values, calculations of the approximate development of a surface from known positions of some of its points. These operations can be performed with the help of normal programs for electronic processors, often standardised programs, or in any case are easy for a programmer to write.

The device is preferably provided with transmitters, which are of known type and for example a normal radio transmitter 16 - receiver 17 coupling which enable transmission of the electrical signals supplied by the optical sensor 11 to the data processing system 15, without any need for electrical connections which are difficult to realise and maintain at a good level of efficiency. The data processing system can therefore be moved to a more advantageous location, for example an office, away from the top of the silo. The means for transmitting can also be used to request new product supply when the quantity of product in the silo falls below a predetermined level. To achieve this the signal can be directly transmitted to a means of transport 18.

The described device is activated each time the process is to be actuated to verify the state of filling of a silo or the shape of the free surface of the materials contained therein.

One after another and in a predetermined sequence, the laser beams are activated; with each laser, for which the processor knows the position and inclination of the beam, the position of the light point the beam generates on the free surface of the material inside the silo is read. The data relating to each laser are stored and at the end of the operation sequence of the lasers, the processors have a series of data relating to a plurality of points of the free surface of the material which enable a virtual reproduction of the free surface to be obtained; then all the processing of the surfaces can be done in order to obtain the desired information. Obviously this data is relatively more precise the higher the number of points read off, which naturally corresponds to the number of laser lights used.

The process of the invention enables obtaining of much more precise data with respect to what is possible in the prior art. As the process enables a virtual reproduction of the free surface of the material in the silo to be obtained, this process can be used not only during normal use of the silos but also during the design stage; by using the process on a prototype it is possible to analyse the virtual surface obtained in order to have an assessment of the dynamics of the effects of material loading and unloading operations. In this way, during the project, any functional faults can be observed and corrected, these normally being determined by the type of surfaces inside the silo, ranging from the loading mouths to the positioning and the conformation of the unloading valves, and in general the constructional characteristics of the silo itself. The constructor is thus able to make a practical assessment of how the silo being designed will operate, and he or she can therefore modify the design as necessary, and "see" the effects of such modifications.

Knowledge of the free surface of the material further enables a more rational use of vibrator devices or shakers, which the silos are generally provided with for flattening the irregularities of the free surface of the material and for making it substantially flat.

By checking the quality of the images supplied by the camera, when a poorly defined image is received due to transparency problems with the wall 13, a fluid source can be manually activated to blow the fluid, through the conduits 14, against the wall 13a to clean it.

The device realising the process of the invention is made in such a way that it can be used both with new-type silos and with silos already in operation. To apply the cap 12, in which the laser lights are located, the telecamera or cameras and the radio transmitter, it is sufficient to make a hole in the upper part of the silo and apply the cap to the hole with the transparent surface facing internally of the silo.

## Claims

1. A process for controlling a filling level of silos containing loose materials, **characterised in that** it comprises following stages: highlighting, in a way which can be detected by known-type instruments, a plurality of points (3) of a free surface (2) of the material contained in the silo; detecting a position of each of the points (3) with respect to a reference system; obtaining electrical signals which are proportional to the detected position of each point; processing the signals in such a way as to obtain a virtual reproduction of the free surface (2) of the material; processing the virtual surface in order to obtain desired information.

2. The process of claim 1, **characterised in that** the stage of highlighting each point (3) includes sending a laser beam onto the free surface (2), which laser beam has a predetermined direction, and which laser beam produces a light point (3) on the free surface (2).

3. The process of claim 2, **characterised in that** the stage of highlighting the points (3) by sending a laser beam and the following stage of detecting the position of the points (3) occur singly for each point (3) and in a predetermined sequence.

4. The process of claim 3, **characterised in that** the stage of detecting each of the points (3) is done by means of devices of known type which verify a fixed position of the laser beam and the inclination of the beam, which identify the light point of the laser beam by means of a fixed-focus optical sensor, and which calculate the position of the light point by means of a geometrical triangulation operation.

5. The process of claim 4, **characterised in that** it comprises a plurality of the fixed-focus optical sensors, each of which performs the operation of identifying the light points on the free surface (2) in zones at predetermined heights of the silo.

6. The process of claim 2, **characterised in that** the sending of the laser beams onto the free surface (2) occurs in an upper part of the silo.

7. The process of claim 1, **characterised in that** it comprises a stage of radio transmission of the electrical signals which are proportional to the detected position for each light point (3).

8. A device for controlling a filling level of silos containing loose materials, **characterised in that** it comprises: a plurality of lasers (10) fixed internally of an upper part of the silo (1), each laser (10) projecting, in a predetermined sequence, a laser beam with a predetermined inclination towards a free surface (2) of the material contained in the silo; at least an optical sensor (11) of known type, fixed internally of the upper part of the silo (1) for detecting a position of each of the light points (3) defined by each laser beam on the free surface (2) and for supplying a corresponding electrical signal; a data processing system (15) of known type for processing the electrical signals and signals proportional to the position of the corresponding laser (10) and the inclination of the laser beam, and also calculating geometric coordinates of the detected light point (3) and processing the geometric coordinates of all the detected points in order to build up a virtual image of a free surface (2) of the material.

9. The device of claim 8, **characterised in that** the at least an optical sensor (11) comprises a fixed-focus telecamera.

10. The device of claim 8, **characterised in that** it comprises a plurality of fixed-focus telecameras, each of which performs an operation of identifying light points (3) on the free surface 2) in zones of predetermined heights of the silo.

11. The device of claim 8, **characterised in that** it comprises a cap (12), fixed on the upper part of the silo (1), in an upper wall (12a) of which the plurality of lasers (10) are arranged as well as the at least an optical sensor (11); the lower parts (12b) of the cap (12) are closed by a transparent surface (13), facing internally of the silo, through which the light beams emitted by the lasers (10) pass and through which the at least an optical sensor (11) detects the light points (3) defined by the laser beams on the free surface (2).

12. The device of claim 11, **characterised in that** it comprises a plurality of conduits (14) afforded in the cap (12), each of which exhibits an end facing towards a wall (13a) of the transparent surface (13) which is facing internally of the silo, and another end connected with a fluid source which on command is blown against the wall (13a).

13. The device of claim 8, **characterised in that** it comprises means for transmitting, of known type, which transmit the electrical signals provided by the at least an optical sensor (11) to the data processing system (15).
